# EUROPEAN PATENT SPECIFICATION

(11) **EP 2 761 541 B1**
(45) Date of publication and mention of the grant of the patent: **27.11.2024**
(21) Application number: 12836901.4
(22) Date of filing: 26.09.2012
(51) Int. Cl.: G06Q 30/0601, G06Q 10/00

(54) **HIGH THROUGHPUT GLOBAL ORDER PROMISING SYSTEM**
GLOBALES AUFTRAGSANNAHMESYSTEM MIT HOHEM DURCHSATZ
SYSTÈME DE PROMESSE DE LIVRAISON MONDIALE À HAUT DÉBIT

(30) Priority: 30.09.2011 US 201161541190 P; 24.09.2012 US 201213625240
(43) Date of publication of application: 06.08.2014
(73) Proprietor: Oracle International Corporation, Redwood Shores, CA 94065 (US)
(72) Inventor: LAKSHMINARAYANAN, Sridhar, Redwood Shores, CA 94065 (US); GOOSSENS, Roger, Redwood Shores, CA 94065 (US); LEE, Moshin, Redwood Shores, CA 94065 (US); ROTARU, Calin, Redwood Shores, CA 94065 (US)
(74) Representative: Gill Jennings & Every LLP
(86) International application number: PCT/US2012/057378
(87) International publication number: WO 2013/049241

(56) References cited:
- US-A1- 2002 095 307
- US-A1- 2005 125 325
- US-A1- 2010 191 663
- US-B1- 6 530 518
- US-B1- 7 065 499
- No further relevant documents disclosed

## Description

### BACKGROUND

Order promising systems track availability for items such as products or services, and provide promises about when ordered items can be delivered. Order promising is used by, for example, order entry, fulfillment, and capture systems such as web stores and call centers. Order promises can be provided based on current on hand stock or future expected demand and supply. An Available to Promise (ATP) system provides a promised date based on current on hand supply and scheduled receipts such as open purchase orders. A Capable to Promise (CTP) system is an extension of ATP that uses future, unplanned supply/demand to calculate projected availability and provide promising dates. A Capable to Deliver (CTD) system uses transportation times to promise the date by which an order can be delivered at a customer site. Supply and demand information can be collected from transaction and planning systems. An example of an order promising system is the Oracle(R) Global Order Promising product.

US 7 065 499 B1 discloses an order promising system including a commerce module that receives a product inquiry from a user.

### SUMMARY

Embodiments of the present invention provide techniques for performing order promising operations in an order promising system, including scheduling orders and responding to inquiries about availability of items and status of orders. Order promising operations are performed using multiple servers that share summary data, which is a read-only /summary of the state of the supply chain. Inquiries can be processed by multiple servers in parallel based upon the summary data, and the number of servers can be increased to achieve high throughput order promising.

Techniques are disclosed for high-throughput order promising using multiple servers. A method for providing item availability information in response to an inquiry requesting availability status of a specified item is provided in accordance with claim 1. The summary data structure is shared among two or more availability servers and one or more scheduling servers using an one or more in-memory database instances, and is partitioned between the two or more availability servers, such that each of the two or more availability servers is assigned to different partitions of the summary data structure. A request broker of the computer system then determines, by evaluating routing rules, which of the two or more availability servers is assigned to the summary data associated with the specified item. The assigned availability server determines availability data for the specified item based upon the summary data and an inquiry response is sent indicating the availability of the item based upon the determined availability data. Order scheduling is provided by a method in accordance with claim 8. Storing the availability information may cause the in-memory database to generate a notification indicating that updated availability information is available, and the notification may be received at an availability server, which can update the summary data structure accordingly.

In some embodiments, retrieving the summary data includes querying the one or more in-memory database instances for the summary data associated with the item. Retrieving the summary data may be done without obtaining exclusive access to the in-memory database. The summary data may include one or more item identifiers and associated availability information. The availability information may include one or more dates of availability of the items. Determining the availability data may include retrieving a date of availability associated with the item by the summary data.

In one aspect, a notification may be received indicating that updated availability information is available. The updated availability information may be stored in the summary data structure. In another aspect, the summary data structure may be optimized for fast insertion and retrieval of data.

In further embodiments, a scheduling request is received by the request broker of the computer system that identifies an item to be scheduled. A schedule for the item may be determined by the request broker of the computer system and availability information stored by the request broker of the computer system for the item in an in-memory database. The availability information may be derived from the schedule and a scheduling response based upon the schedule may be sent or delivered by the request broker of the computer system. In one aspect, storing availability information in an in-memory database is performed by a separate thread. Storing may cause the one or more in-memory database instances to generate a notification indicating that updated availability information is available. Thereafter, the notification indicating that updated availability information is available may be received and updated availability information may be stored at the availability server in the summary data structure.

### BRIEF DESCRIPTION OF THE DRAWINGS

FIG. 1 is a block diagram illustrating components of an exemplary operating environment.
FIG. 2 is a block diagram illustrating an exemplary computer system in which embodiments of the present invention may be implemented.
FIG. 3A is a block diagram illustrating an exemplary high throughput global order promising system using a single shared in-memory database instance according to one embodiment of the present invention.
FIG. 3B is a block diagram illustrating an exemplary high throughput global order promising system using multiple distributed in-memory database instances according to one embodiment of the present invention.
FIG. 4 is a block diagram illustrating an exemplary brokering layer of a high throughput global order promising system according to one embodiment of the present invention.
FIG. 5 is a block diagram illustrating an exemplary availability inquiry engine of a high throughput global order promising system according to one embodiment of the present invention.
FIG. 6 is a block diagram illustrating an exemplary shipping option engine of a high throughput global order promising system according to one embodiment of the present invention.
FIG. 7 is a block diagram illustrating an exemplary in-memory summary data structure of a high throughput global order promising system according to one embodiment of the present invention.
FIG. 8 is a block diagram illustrating an exemplary scheduling engine of a high throughput global order promising system according to one embodiment of the present invention.
FIG. 9 is an illustrative flow diagram of a brokering process in accordance with embodiments of the invention
FIG. 10 is an illustrative flow diagram of an availability inquiry process in accordance with embodiments of the invention
FIG. 11 is an illustrative flow diagram of a scheduling process in accordance with embodiments of the invention

### DETAILED DESCRIPTION OF THE INVENTION

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

The term "machine-readable medium" includes, but is not limited to portable or fixed storage devices, optical storage devices, wireless channels and various other mediums capable of storing, containing or carrying instruction(s) and/or data. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

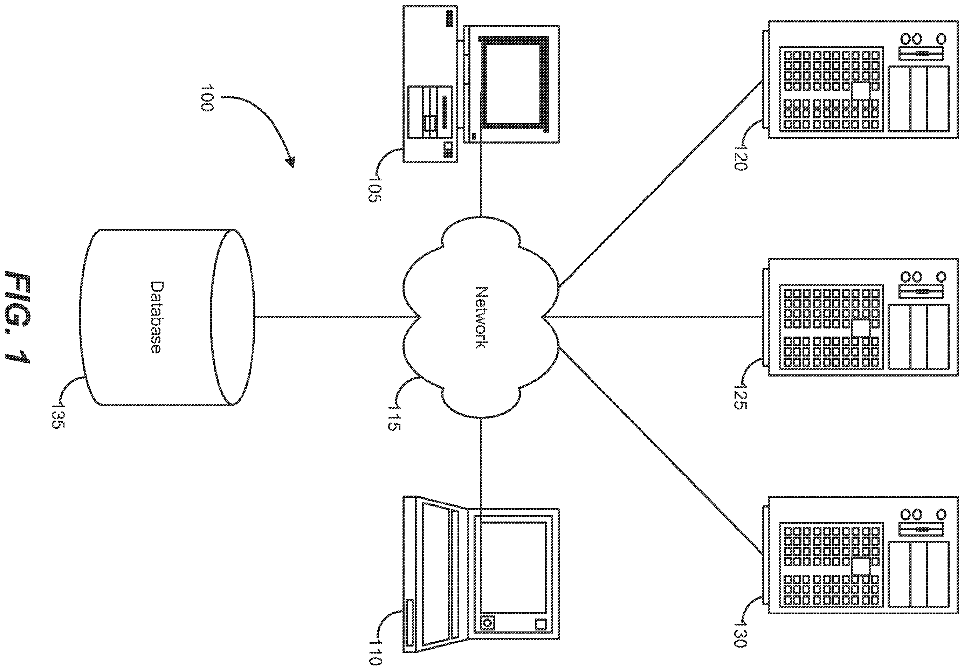

FIG. 1 is a block diagram illustrating components of an exemplary operating environment The system 100 can include one or more user computers 105, 110, which may be used to operate a client, whether a dedicated application, web browser, etc. The user computers 105, 110 can be general purpose personal computers (including, merely by way of example, personal computers and/or laptop computers running various versions of Microsoft Corp.'s Windows and/or Apple Corp.'s Macintosh operating systems) and/or workstation computers running any of a variety of commercially-available UNIX or UNIX-like operating systems (including without limitation, the variety of GNU/Linux operating systems). These user computers 105, 110 may also have any of a variety of applications, including one or more development systems, database client and/or server applications, and web browser applications. Alternatively, the user computers 105, 110 may be any other electronic device, such as a thin-client computer, Internet-enabled mobile telephone, and/or personal digital assistant, capable of communicating via a network (e.g., the network 115 described below) and/or displaying and navigating web pages or other types of electronic documents. Although the exemplary system 100 is shown with two user computers, any number of user computers may be supported.

In some embodiments, the system 100 may also include a network 115. The network may be any type of network familiar to those skilled in the art that can support data communications using any of a variety of commercially available protocols, including without limitation TCP/IP, SNA, IPX, AppleTalk, and the like. Merely by way of example, the network 115 maybe a local area network ("LAN"), such as an Ethernet network, a Token-Ring network and/or the like; a wide-area network; a virtual network, including without limitation a virtual private network ("VPN"); the Internet; an intranet; an extranet; a public switched telephone network ("PSTN"); an infra-red network; a wireless network (e.g., a network operating under any of the IEEE 802.11 suite of protocols, the Bluetooth protocol known in the art, and/or any other wireless protocol); and/or any combination of these and/or other networks such as GSM, GPRS, EDGE, UMTS, 3G, 2.5 G, CDMA, CDMA2000, WCDMA, EVDO etc.

The system may also include one or more server computers 120, 125, 130 which can be general purpose computers and/or specialized server computers (including, merely by way of example, PC servers, UNIX servers, mid-range servers, mainframe computers rack-mounted servers, etc.). One or more of the servers (e.g., 130) may be dedicated to running applications, such as a business application, a web server, application server, etc. Such servers may be used to process requests from user computers 105, 110. The applications can also include any number of applications for controlling access to resources of the servers 120, 125, 130.

The web server can be running an operating system including any of those discussed above, as well as any commercially available server operating systems. The web server can also run any of a variety of server applications and/or mid-tier applications, including HTTP servers, FTP servers, CGI servers, database servers, Java servers, business applications, and the like. The server(s) also may be one or more computers that can be capable of executing programs or scripts in response to the user computers 105, 110. As one example, a server may execute one or more web applications. The web application may be implemented as one or more scripts or programs written in any programming language, such as JavaTM, C, C #, or C++, and/or any scripting language, such as Perl, Python, or TCL, as well as combinations of any programming/scripting languages. The server(s) may also include database servers, including without limitation those commercially available from Oracle^{®}, Microsoft^{®}, Sybase^{®}, IBM^{®} and the like, which can process requests from database clients running on a user computer 105, 110.

In some embodiments, an application server may create web pages dynamically for displaying on an end-user (client) system. The web pages created by the web application server may be forwarded to a user computer 105 via a web server. Similarly, the web server can receive web page requests and/or input data from a user computer and can forward the web page requests and/or input data to an application and/or a database server. Those skilled in the art will recognize that the functions described with respect to various types of servers may be performed by a single server and/or a plurality of specialized servers, depending on implementation-specific needs and parameters.

The system 100 may also include one or more databases 135. The database(s) 135 may reside in a variety of locations. By way of example, a database 135 may reside on a storage medium local to (and/or resident in) one or more of the computers 105, 110, 115, 125, 130. Alternatively, it may be remote from any or all of the computers 105, 110, 115, 125, 130, and/or in communication (e.g., via the network 120) with one or more of these. In a particular set of embodiments, the database 135 may reside in a storage-area network ("SAN") familiar to those skilled in the art. Similarly, any necessary files for performing the functions attributed to the computers 105, 110, 115, 125, 130 may be stored locally on the respective computer and/or remotely, as appropriate. In one set of embodiments, the database 135 may be a relational database, such as Oracle 10g, which is adapted to store, update, and retrieve data in response to SQL-formatted commands.

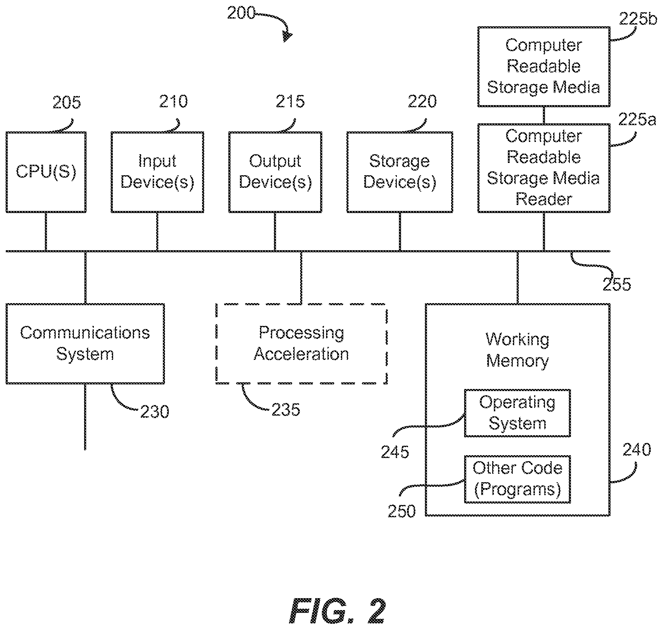

FIG. 2 illustrates an exemplary computer system 200. The system 200 may be used to implement any of the computer systems described above. The computer system 200 is shown comprising hardware elements that may be electrically coupled via a bus 255. The hardware elements may include one or more central processing units (CPUs) 205, one or more input devices 210 (e.g., a mouse, a keyboard, etc.), and one or more output devices 215 (e.g., a display device, a printer, etc.). The computer system 200 may also include one or more storage device 220. By way of example, storage device(s) 220 may be disk drives, optical storage devices, solid-state storage device such as a random access memory ("RAM") and/or a read-only memory ("ROM"), which can be programmable, flash-updateable and/or the like.

The computer system 200 may additionally include a computer-readable storage media reader 225a, a communications system 230 (e.g., a modem, a network card (wireless or wired), an infrared communication device, etc.), and working memory 240, which may include RAM and ROM devices as described above. In some embodiments, the computer system 200 may also include a processing acceleration unit 235, which can include a DSP, a special-purpose processor, and/or the like.

The computer-readable storage media reader 225a can further be connected to a computer-readable storage medium 225b, together (and, optionally, in combination with storage device(s) 220) comprehensively representing remote, local, fixed, and/or removable storage devices plus storage media for temporarily and/or more permanently containing computer-readable information. The communications system 230 may permit data to be exchanged with the network 220 and/or any other computer described above with respect to the system 200.

The computer system 200 may also comprise software elements, shown as being currently located within a working memory 240, including an operating system 245 and/or other code 250, such as an application program (which may be a client application, web browser, mid-tier application, RDBMS, etc.). It should be appreciated alternate embodiments of a computer system 200 may have numerous variations from that described above. For example, customized hardware might also be used and/or particular elements might be implemented in hardware, software (including portable software, such as applets), or both. Further, connection to other computing devices such as network input/output devices may be employed. Software of computer system 200 may include code 250 for implementing embodiments of the present invention as described herein.

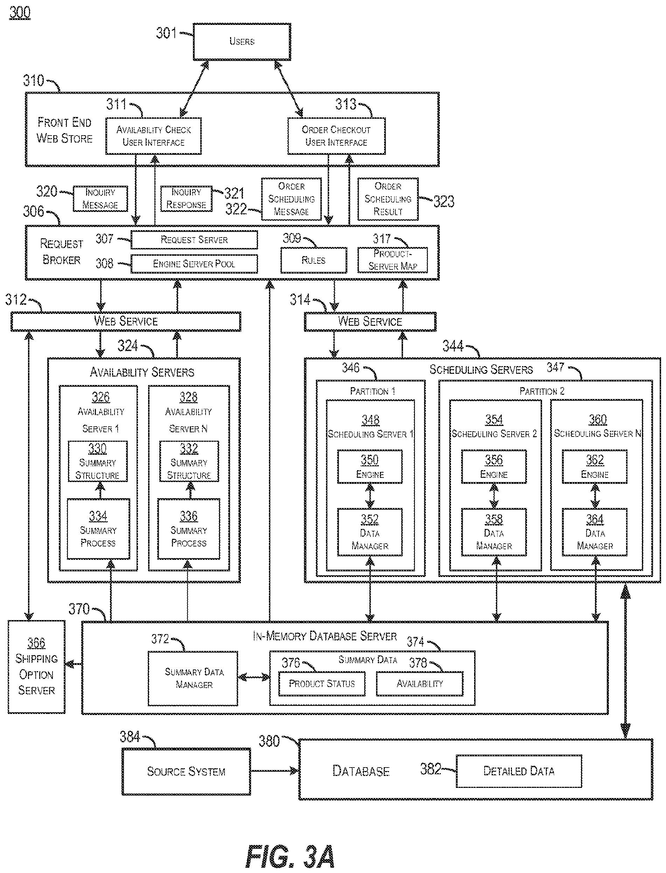

FIG. 3A is a block diagram illustrating an exemplary high throughput global order promising system 300 using a shared in-memory database instance 370 according to one embodiment of the present invention. The order promising system 300 may be implemented as, for example, computer program code executable on a processor of a computer system. The order promising system 300 performs high-throughput order promising operations, which include tracking orders and availability of items such as products or services, and providing promises about the dates by which ordered items can be delivered. Order promising requests, such as item availability inquiries 320, order scheduling requests 322, or other types of requests, are generated by an online store 310 or other source, and sent to a request broker 306, which distributes the requests to multiple different types of servers, including availability servers 324 and scheduling servers 344, according to the types of the requests 320, 322 and other criteria defined by routing rules 309. Scheduling servers 344 use a persistent database 380 to store detailed data 382 that represents the state of the order processing system 300, including the orders, inventory information, promised dates, order promising workflow configuration, and so on. The scheduling servers 344 share portions of the detailed data 382 with other types of servers, such as the availability servers 324 and shipping options servers 366. The shared data is referred to herein as summary data 374, and includes item status information 376, item availability information 378, and other information that may be needed by the other types of servers 324, 366. The summary data 374 is shared among the servers 324, 344, 366 using an in-memory database 370 or other high-speed shared database.

Sharing the summary data 374 via the in-memory database 370 enables the order promising operations to be performed more efficiently, because the different types of servers can perform operations in parallel (i.e., concurrently). System throughput, e.g., the rate of processing of order promising requests, can be increased by adding more servers 324, 344, 366, and dividing, i.e., partitioning, the items among the servers, so that multiple scheduling servers can process orders for items in different partitions in parallel. The availability servers 324 can similarly be assigned to different partitions of the data, and/or load balanced by other means, since the inquiry operations performed by the availability servers 324 read but do not write to the summary data 374. Thus, multiple availability servers 324 can perform inquiry operations on the same portion(s) of the summary data 374 (e.g., the same items) in parallel. Each of the availability servers 324 can maintain its own copy of the summary data 324 in a summary structure 330, which can be used when processing availability inquiries 320. An availability server 326 modifies the summary structure 330 in response to notifications received from the in-memory database 370 indicating that the summary data has changed. In other embodiments, the availability servers 324 can read the summary data 374 directly using the in-memory database 370 when processing availability inquiries, instead of maintaining the summary structure 330.

In one set of embodiments, the front end 310, which can be, for example, a web page or other user interface for ordering items in an online store, receives requests to place orders, check item availability, change or cancel orders, and the like, from users 301. The front end 310 may be provided by a web server that implements the online store and sends order-related requests to an order request broker 306, which distributes the requests to the availability servers 324 and the scheduling servers 344. Each of the scheduling servers 344 uses an order processing engine 350 to perform the actual order promising operations, such as scheduling orders, completion date promising, and so on. The engine 350 may be, for example, implemented in computer program code in a language such as C, C++, JAVA, or the like. In one example, the order processing engine 350 constructs and maintains order processing data structures in a memory of the computer system, e.g., random access memory ("RAM") or the like, that contain order processing data representing orders and related information needed to perform the order processing operations. The engine 350 can transfer the order processing data between system memory and a persistent storage medium such as the database 380. In one example, when the engine 350 is started, it loads existing order data from detailed data 382 stored in the database 380 into system memory, so that order promising operations are performed using memory access operations on order processing data stored in memory. The database 380 may be, for example, a relational database, such as the Oracle^{®} relational database management system, or the like.

In one or more embodiments, the engine 350 stores and retrieves order information in the database 380 as information is consumed and generated by the processing logic. For example, when a new order 322 is placed, the engine 350 retrieves information about the availability of the ordered item from the database 380 and/or source systems 384, determines a promised date for completion of the order, stores information representing the order in the database 380 as detailed data 382, and provides the promised date and status of the order, which are returned to the front end 310 in an order scheduling result 323. The source systems 384 provide information used in order promising, such as inventory details, which can be loaded into the database 380. Thus, the database 380 contains information needed by the order promising system 300, including information about the orders, which is updated as orders are created, modified, and completed. The detailed data 382 in the database 380 is stored persistently, e.g., on a storage medium such as a disk, so that the information about the state of the orders, processing times, and so on, is not lost if the order processing service 300 is shut down, e.g., to perform system maintenance, or as a result of a power failure or crash.

In one aspect, the web front end 310 can receive requests for orders at high rates, which can result in corresponding high rates of requests to the engine 350. For example, online stores operated by retailers or distributors with very high volumes, particularly with extreme peaks during the introduction of new products, generate requests at high rates that can exceed the capabilities of a single instance of the engine 350. If the user interface front end 310 generates incoming order promising operation requests 320, 322 at a rate greater than the maximum processing rate of the engine 350, problems such as delays in responding to user order requests can ensue.

In one set of embodiments, the order promising system 300 uses availability servers 324 and scheduling servers 344 to increase the throughput performance (e.g., orders processed per second) of the system 300 beyond that provided by a single instance of the engine 350. This system architecture allows for dynamic scalability combined with monitoring of response time and other performance metrics to target. The system 300 allows for rules and thresholds that automatically guide the administrative components to scale up or down to adjust for the varying system loads. The architecture allows for 24X7 system availability while providing elasticity in terms of throughput and load balancing.

In one set of embodiments, as introduced above, the order promising system 300 receives, processes, and responds to requests to perform order promising operations using multiple types of servers that share order summary data. The order promising operations are divided into multiple different types, including the availability inquiry operation that checks if items are available for ordering, and the order scheduling operation. Availability inquiry operations are processed by the availability servers 324. The order scheduling operation creates and schedules a new order for an item, and provides a promise as to when the order will be completed. Order scheduling operations are processed by the scheduling servers 344. Other types of operations include a shipping options inquiry operation, which inquires about the options available for shipping an order. Shipping options operations can be processed by a shipping options server 366. Thus, orders or other operations that can be treated differently can be associated with a type and processed by a particular type of server, which can be optimized to process orders of that type efficiently. For example, each type of server can maintain and use a different portion or copy of the detail data 382 that represents the state of the order processing system. The different types of servers can then access their portions or copies of the data more efficiently than they can access the detail data, because, for example, a particular type of server may perform a limited set of operations, such as reading but not writing the data, or may access only certain portions of the data, or may otherwise be able to use knowledge about the behavior of the particular type of operations implemented by the server to access data more efficiently.

In one or more embodiments, there can be multiple instances of each type of server 324, 344, 366, e.g., there can be more than one server of each type can be running, and the work load for each type of operation can be divided among the servers that perform that type of operation. The servers 324, 344, 366 can be distributed across one or more hosts (e.g., computer processors), with one or more servers of the same or different types executing on each host. For example, each server can be located on a different host, in which case the servers access shared data via network communication between the hosts. In another example, several servers can be located on a single host, in which case the servers can access shared data via faster communication pathways, such as shared memory or inter-process communication. A single host can ordinarily handle a limited number of servers, so expanding the order promising system's processing capacity and/or performance is achieved, in one or more embodiments, by adding additional hosts running additional server instances, and servers on different hosts access shared data via network communication.

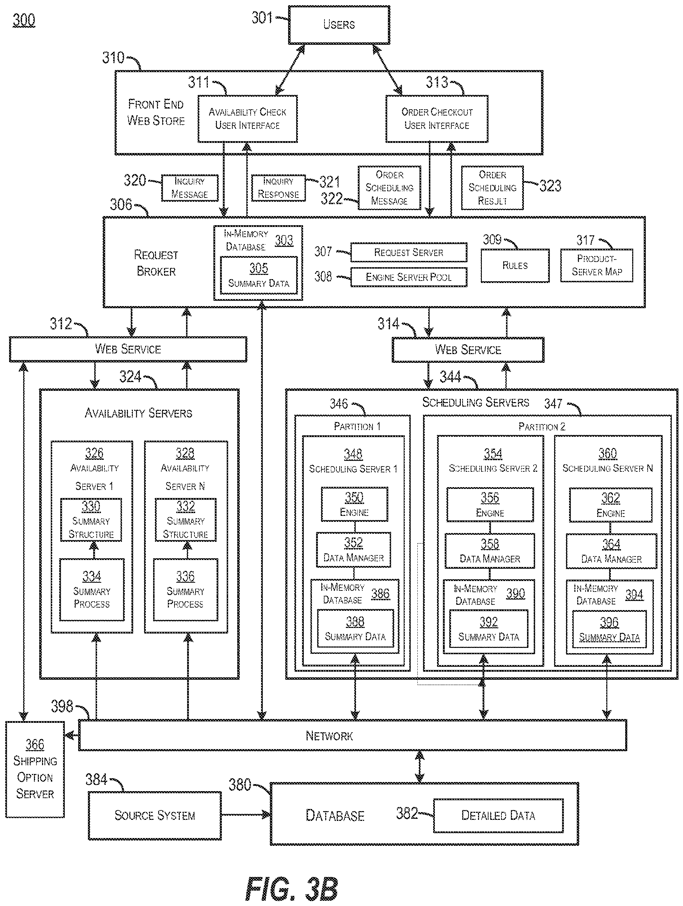

In one or more embodiments, efficient access to shared data is achieved using an in-memory database 370, e.g., Oracle^{®} TimesTen^{®} or the like. The shared data is stored in a shared memory region that can be accessed by multiple servers located on the same host. TimesTen also enables servers that are not located on the same host to access shared data, with the shared data and data updates being exchanged between the servers' hosts via a communication network. The in-memory database can be configured and accessed in at least two different ways, corresponding to FIGs. 3A and 3B, respectively. FIG. 3A illustrates a shared in-memory database instance 370 according to one embodiment, and FIG. 3B illustrates multiple distributed in-memory database instances 303, 386, 390, and 394 that communicate via a network 396 according to another embodiment.

FIGs. 3A and 3B show multiple servers 324, 344, 366, but do not show a particular assignment of servers to host computers. Thus, the servers 324, 344, 366 can be understood as server processes that can execute on host computers. Each of the servers 324, 344, 366 can correspond to a host computer in one or more examples, but in other examples, the servers 324, 344, 366 can share host computers, i.e., multiple servers can execute on a host computer. A host computer can have one or more processors (e.g., processing units, cores, or the like) that access the same memory space. Two or more of the servers 324, 344, 366 can execute on the multiprocessor or multicore host and access the in-memory database 370 of FIG. 3A, including the summary data 374, in shared memory using memory access operations, which are more efficient than using a communication network 398 (e.g., TCP/IP, Ethernet, or the like) as shown in FIG. 3B. However, if a multiprocessor or multi core computer is not being used, or the number of servers needed is greater than the number of processors or cores available in multiprocessor or multicore hosts, then the network communication arrangement shown in FIG. 3B may be preferred, because the number of hosts can be increased by adding more hosts.

In one example, the servers 324, 344, 366 can execute on the same host computer, but the host should have a sufficient number of processors or cores to handle the order promising workload. If the workload exceeds the capacity of a single host computer, then additional hosts can be added as needed to process the additional workload, with the workload being distributed among the hosts by the request broker 306. Conversely, if the computing capacity of the host computer(s) exceeds that needed to handle the workload, the one or more host computers, processors, or cores can be removed and allocated to other tasks, with the request broker being reconfigured to distribute the incoming order promising requests to the remaining host computers.

Thus, FIG. 3A shows a single in-memory database instance (e.g., a database server) 370 in accordance with one or more embodiments. The in-memory database instance 370 is accessed in a client-server-like arrangement, in which the order promising servers act as clients of the in-memory database server 370. In FIG. 3A, if one or more of the order promising servers, such as the availability servers 324 and/or the scheduling servers 344, are located on different hosts, then each server that is not on the same host as the in-memory database server 370 establishes a network connection to the in-memory database server 370. Servers that are located on the same host as the in-memory database server 370 can communicate with the in-memory database server 370 using shared memory instead of a network connection.

As introduced above, the system 300 includes a request broker 306, which receives inquiry messages 320 and order scheduling messages 322 from a source such as an online store that sells the items being ordered, and forwards the messages to the appropriate servers. The request broker may be, for example, a server that runs as an independent process or as part of a process that also provides other services. The request broker 306 examines each incoming message, determines which of the servers 324, 344, 366 will process the message, and forwards the message to the determined server. The determination of which server to use is based upon information in the message, message routing rules 309 and/or in-memory summary data 374, which is described below. An availability server is selected if the message is an inquiry message, or a scheduling server is selected if the message is a scheduling message.

In one set of embodiments, the particular availability server or scheduling server is selected from a set of availability servers 324 or scheduling servers 344 using the routing rules 309. Each rule can have a condition and an action. If the condition is satisfied (i.e., met) by the incoming message, then the action associated with the rule is performed. The action can, for example, determine a server to which the message is to be forwarded. If the condition is not satisfied, another rule is selected and evaluated in the same way, or, if all rules have been evaluated, a default action can be performed, such as forwarding the message to a randomly selected server. The rules can be user-defined and/or provided by the system. The incoming messages 320, 322 reference items such as products, and the conditions can be based on the product identity, product attributes, product category, product grouping, product relationships, inventory thresholds, and so on. The rules can be updated by users to modify routing behavior. The request broker 306 can split an incoming request message 320 into multiple sub-requests and route each sub-request to a different server, so that the sub-requests can be processed in parallel. The request broker can then consolidate the results from the sub-requests into a single result message that is returned as a response to the request message.

In one set of embodiments, the availability server 326 generates responses to queries for order-related information, such as requests for current and future stock availability at a specified location. The availability server 326 determines the requested availability information using a representation of summary data stored in a summary structure 330. The summary structure 330 can include, for example, time-phased availability information, product status, and the like. The availability server 326 reads summary data from the summary structure 330, determines the desired result, such as the earliest availability date for a specified item quantity, and sends the result as a response to the received request, e.g., as a response message sent to the brokering server from which the request was received.

In one set of embodiments, the summary data is created and stored by the scheduling server as summary data 374 in an in-memory database 370, e.g., Oracle^{®} TimesTen^{®} or the like, to achieve faster query performance than ordinary databases, which perform disk input/output operations when updating the database and executing queries. A data manager 352 of a scheduling server 348 performs the actions involved in storing the summary data 374 in the in-memory database 370. Each of the servers 348, 354, 360 illustrated in FIG. 3A includes an associated engine 350, 356, 362 and data manager 352, 358, 364. The in-memory database 370 does not ordinarily perform disk input/output operations when updating the database or executing queries. Instead, the in-memory database maintains the database contents in random-access memory (RAM) or the like, with the data being loaded into memory when the in-memory database is started, and the data being written to disk when the in-memory database is stopped or a disk commit operation is performed.

In one or more embodiments, the summary data is represented using the summary structure 330 that includes a copy of the summary data 374 stored in the in-memory database by the scheduling servers. This arrangement of the availability server(s) is shown in Figs. 3A and 3B. In other embodiments, the availability server uses the in-memory database, instead of maintaining the summary structure 330, in which case the availability server can establish a network connection to a shared instance of the in-memory database (similar to the connections from the scheduling servers to the in-memory database in FIG. 3A), or the availability server can access an instance of the in-memory database 384 of FIG. 3B via shared memory (similar to the arrangement shown for the scheduling servers in FIG. 3B).

In one set of embodiments, a summary process 334 in the availability server 326 updates the summary structure 330 to reflect updates made by the scheduling servers 344 to the summary data 374. The summary process 334 performs these updates in response to notifications received from the in-memory database. These notifications may be, for example, TimesTen XLA notification events, which are generated by the TimesTen in-memory database when database data is modified. Each notification event identifies the data item (e.g., relational row and column) that has been updated. The availability server retrieves the item identified in the notification from the in-memory database, and stores the item in the summary structure 330. Thus, the availability server modifies the summary structure 330 in response to updates to the in-memory summary data 374.

In one embodiment, the summary process 330 of the availability server 326 uses a synchronization operation such as a mutual exclusion lock to prevent multiple servers from writing to the summary structure 330. In other embodiments, the availability servers are associated with different portions of the summary data 374 and need not perform synchronization operations when updating the summary structure 330. Two availability servers 326, 328 are shown, each including a summary structure 330, 332 and a summary process 334, 336. Any number of availability servers may be used, as needed to handle the workload of incoming requests generated by the web front end 310.

The availability inquiry operations read but do not modify the summary data in the summary structure 330, and therefore the availability server 326 need not prevent other servers from simultaneously performing availability inquiry operations. In contrast, in servers that modify the order promising system state data, precautions are taken to avoid simultaneous access to the state data by multiple servers. These precautions, such as obtaining mutual exclusion locks on the state data or portions thereof, are time-consuming, and can result in low throughput at the read/write servers, because one request is processed at a time by a server. The availability server performs a read-only check on the in-memory summary data and does not modify inventory levels or other state data. The results of this check may be sufficient to satisfy the user's request, e.g., if the user is checking if an item is available, and does not wish to order the item. Thus, the availability server performs a first level availability check that can increase performance by reducing the request load on the scheduling server. Multiple availability servers can run simultaneously, and the number of availability servers in the pool of running servers can be dynamically configured while the system is running to adapt to system loads.

In one or more embodiments, a summary data structure 330 stores a summary of order promising data. The summary structure 330 is used by, for example, the request broker with a user-configurable model to route requests, and by the availability server to determine item availability. The summary data is summarized and organized to reduce the volume of data that is stored in memory, compared to the volume of data stored in the data details database. The summary data can be, for example, product, product category, product relationship, current and projected inventory by warehouse/location

The brokering layer 306 uses rules 309, e.g., product to server node mappings 317, or condition-based rules as described elsewhere herein, to select a server to which each request will be sent. For example, the requests 320 and 322 can be partitioned according to one or more of their attributes, such as the geographical area from which the requests originate, the time at which the request is received, the type of item being ordered, and the like. Each server can be associated with a partition. In FIG. 3A, a first scheduling server 348 is associated with a first partition 346. A second scheduling server 354 and an Nth scheduling server 360 are associated with a second partition 347. Order scheduling requests 322 for items having item numbers in a first range associated with the first partition 346 are sent to the first server 348 by the request broker 306. Order scheduling requests 322 for items having item numbers in a second range associated with the second partition 347 are sent to the second server 354 or the Nth server 360 by the request broker 306. The association between servers and partitions can be changed dynamically, e.g., while the system 300 is operating and the servers are running, by a user or administrator, or in response to changing workload levels and/or server load levels, availability, and the like. In one or more embodiments, the system includes other types of servers, such as a shipping option server 366, and the request broker 306 can route shipping option request messages to the shipping option server 366.

In one set of embodiments, a system metric and administration module (not shown) can control and monitor the various types of servers in the system, including the availability servers, scheduling servers, and shipping option servers. The administration module provides control operations, e.g., start/stop, for a server cluster 344 or for individual nodes 346, and can also provide statistical information for metrics such as memory load, CPU load, active thread information, request throughput, and min/max/average request processing times. The administration module can support dynamic scalability by automatically starting/stopping server nodes to maintain average system throughput within predefined limits. 24x7 support can be provided by a hot-swap capability, in which a server node can be launched and updated with the latest detail data 382 in the background, and then the server node can take over the active server node's request channel. The previously active server can then be shutdown. This server swap can be achieved seamlessly from an end-user perspective, and no requests are dropped.

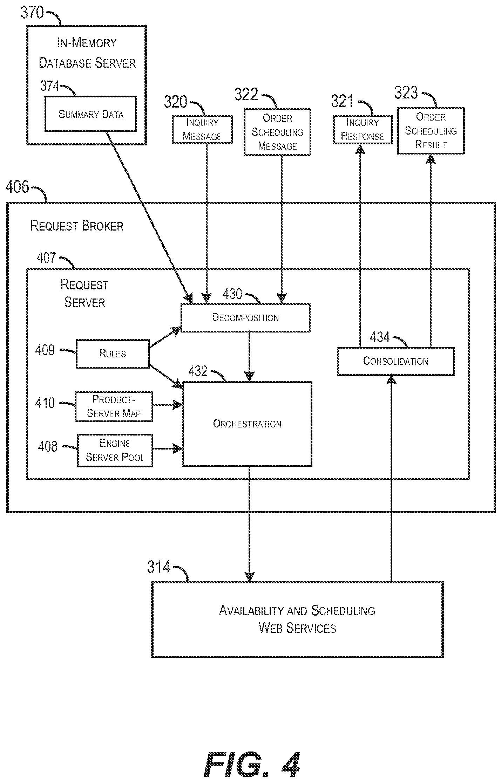

FIG. 4 is a block diagram illustrating an exemplary brokering layer of a high throughput global order promising system according to one embodiment of the present invention. The brokering layer includes a request broker 406, which can have user defined rules 409 on products and product grouping and relationship. A decomposition component 430 of the request broker 406 can split an incoming request message 320 into multiple sub-requests. An orchestration component 432 can route each request or sub-request to a different server according to the rules 409, so that the requests (and sub-requests) can be processed in parallel. A product-server map 410 can be used in addition to or instead of the rules 409 to select a server to which the request is to be sent. The available servers can be included in an engine server pool 408, which the decomposition component 430 can consult to determine which servers are available. A consolidation component 434 can then consolidate the results from the sub-requests into a single result message that is returned as a response to the request message. The rules 409 can be configurable, and can be based on inventory threshold, product category or family, product relationship etc. The rules 409 can be updated, so that the updated rules are used for future requests. Based on a received inquiry request message 320 or scheduling request message 322, the request broker 406 checks the in memory summary data structure and user-defined rules, and dynamically determines which in memory availability inquiry or scheduling server(s) to route the request to. The request broker 406 can also route the request to an in memory shipping option engine 366, and determine which of multiple in memory shipping option servers 366 to use.

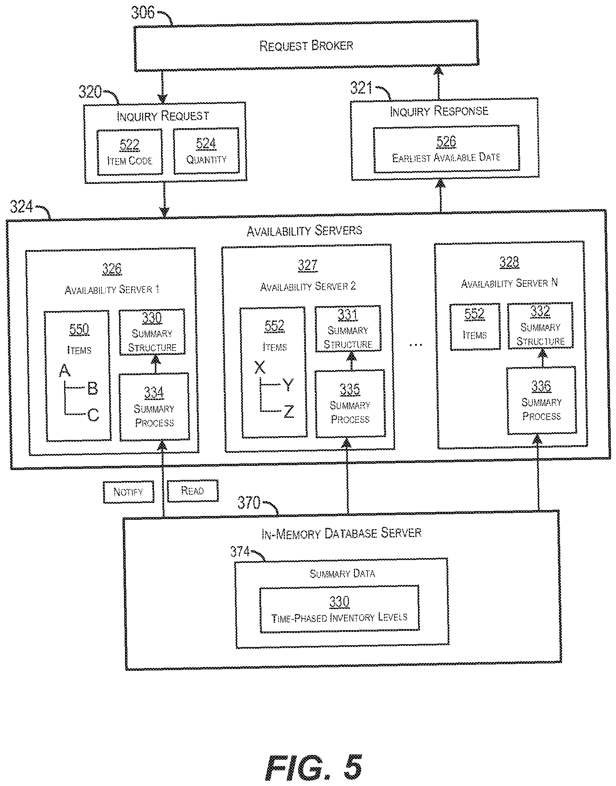

FIG. 5 is a block diagram illustrating an exemplary availability inquiry server pool (i.e., cluster) 324 of a high throughput global order promising system according to one embodiment of the present invention. The availability servers 324 can provide quick visibility into current and future stock availability by location. An availability server 325 can take as an input customer material availability inquiries 320 routed from the web store 310 through the brokering layer 306. Using summary data information such as time phased availability, product status, and so on, the availability server 326 can return a response 321 that includes an earliest availability date 526 for a requested quantity 524 of an item 522. The summary data 374 is stored in an in-memory database 374, which can be accessed via shared memory or network communication, as described above with reference to FIG. 3A.

An availability server 326 can perform a read-only check on the in-memory summary data structures, and does not decrease inventory levels. The availability server 326 can perform a first-level type of availability check, in order to maximize performance. Because of the read-only characteristics of the queries that the availability server 326 performs on internal summary data, the operations of the availability servers 324 need not bottleneck the scheduling servers 344. The number of servers in the availability server pool 324 can be dynamically configured to adapt to changing system loads.

In one example, rules 309 can be defined to route requests for different types of products to different servers 324. Suppose that requests for a product A or related products B and C are to be routed to a first availability server 326, and requests for product X or related products Y and Z are to be routed to a second availability server 327. The first server 326 can then be configured with an items list 550 that indicates which items the server 326 will process. The items list 550 includes product A, and also indicates that product A is related to products B and C. The items list 550 therefore indicates that the server 326 is assigned to products A, B, and C, and should process any requests that it receives for those products. In one example, the server 326 can ignore requests for items that are not in the items list 550, although the broker 306 should ordinarily not send requests for non-assigned items to the server 326. The item list 550 can also be stored in or accessible to the request broker 306, or a corresponding routing rule can be added to the routing rules list 309 of the request broker 306. In this example, a first routing rule can be defined having a condition such as "product is A, B, or C" and an action such as "route to server node 1." In other embodiments, this rule can be stored in the server 326 as an alternative to the items list 550.

Similarly, the second server 327 can be configured with an items list 552 (or corresponding rule) that indicates which items the server 327 will process. The items list 552 includes product X, and also indicates that product X is related to products Y and Z, so that the server 327 will process requests that reference or include at least one of products X, Y, and Z. Similarly, a second routine rule can have a condition such as "product is X, Y, or Z" and an action "route to server node 2." Other types of rules are contemplated as well, e.g., a rule that searches a data table for the product identifier, and an action that selects the server node associated with the product identifier in the data table.

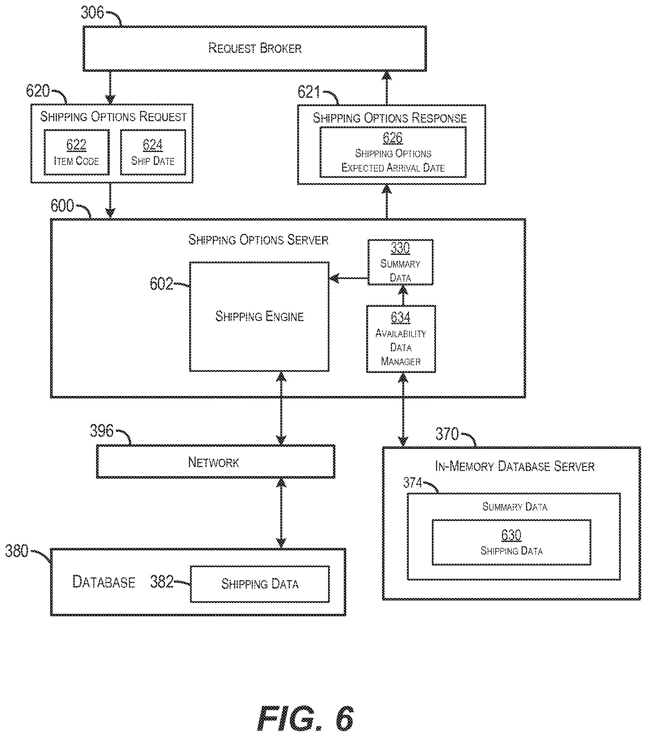

FIG. 6 is a block diagram illustrating an exemplary in-memory shipping option server 600 of a high throughput global order promising system according to one embodiment of the present invention. The shipping option server 600 can provide a list of shipping options with corresponding expected arrival dates. The shipping option server 600 receives as an input an item code 622 and ship date 624, and can derive an expected arrival date 626 based on the available shipping options for the particular item. The input to the shipping option server 600 can be a shipping option request 620 from the request broker 306. In one example, a user to checks availability on the web store 310, and if the queried material and quantity are available, then the next step can be to check for available shipping options. The shipping option server 600 can return a set of valid shipping options with expected arrival dates 626 for the requested item. The shipping option engine 600 can thus separate material promising and scheduling from shipping option selection.

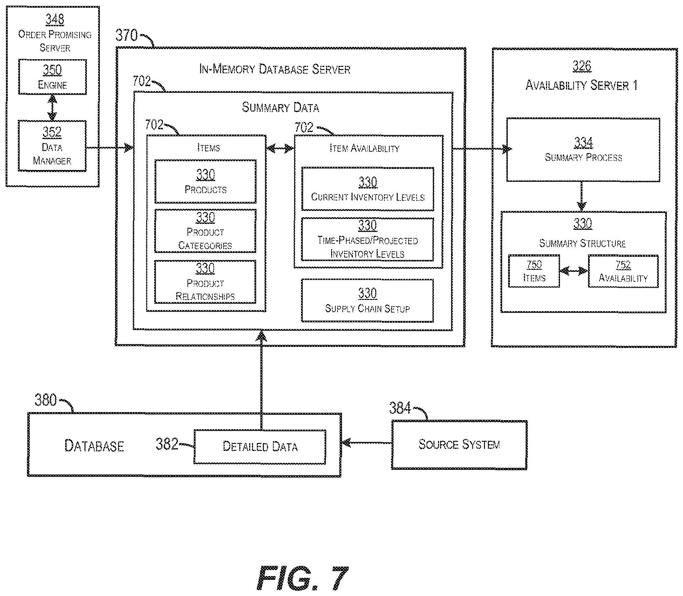

FIG. 7 is a block diagram illustrating an exemplary in-memory summary data structure 702 of a high throughput global order promising system according to one embodiment of the present invention. The in-memory summary data structure 702 is stored in an in-memory database server 370, e.g., in a shared memory region. The data structure 702 stores information such as product, product category, product relationship, and current and projected inventory by warehouse/location that can be used by the request broker 306 to route the request, and for use by the availability inquiry servers 324. The summary data structure 702 can also contain the sourcing, manufacturing, supplier, and capacity information for use by the scheduling servers 344. Data in the in-memory summary data structure 702 can be organized and summarized to reduce the volume of data and/or accesses. The summary data 702 can provide for configurable redundancy and columnar storage for fast access, and can be indexed to make search and access much efficient.

Any inventory change due to scheduling changes can be reflected dynamically in the memory data structure 702 using asynchronous and near real time updates. Inventory changes due to shipping, receiving, or others can be reflected dynamically in the memory data structure and close to real time update if users choose to. Setup-related changes (new items, new customers, new warehouse/location, and so on) can be brought into the memory structure 702 at a user's request.

In one or more embodiments, the availability server 326 maintains a copy of at least a portion of the summary data 702 in a summary structure 330, which can include an association between items 750 and item availability 752. As described above, the summary data 702 is a summary of portions of the detailed data 382. A summary process 334 generates and updates the summary structure 330 to contain a copy of the information in the summary data 702 in response to notifications received from the in-memory database 370. The summary process can construct the summary structure 330 using data structures and algorithms that provide for quick lookup and modification of data items. For example, the summary structure 330 may consist of a listing by product and location of the availability status (e.g., "Available," "Less Than 10 in Stock," "Out of Stock," or, alternatively, "Available" or "Available in [n] Days") of each Product-Location combination.

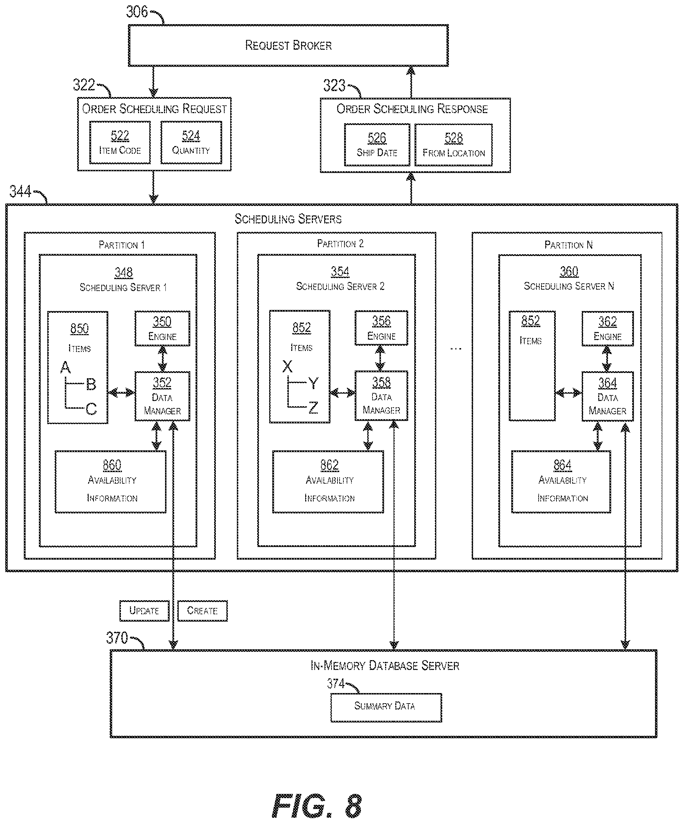

FIG. 8 is a block diagram illustrating an exemplary pool, i.e., cluster 344, of scheduling servers 348, 354, 360 in a high throughput global order promising system 300 according to one embodiment of the present invention. Each scheduling server 348 includes an order promising engine 350 that can perform scheduling for requests 322 based on item availability. The scheduling servers receive the scheduling requests 322 from the request broker 306 or other source. Each order scheduling request 322 includes an item code 522 identifying the item to be scheduled, and a quantity 524 of the item to be scheduled. Based on the content of the request 322 and setup of scheduling engine 350, single level inventory availability can be checked before scheduling, or multiple level availability can be checked, in which case information such as components, manufacturing resources, supplier capacities, and lead times can be considered. Product substitutions and component substitutions can be included as well. Eventually a ship date 526, product, and ship from location 528 (e.g., warehouse or supplier site) can be returned in an order scheduling request message 323 to the brokering module 306.

Each scheduling server 348 can access or store shared information, such as organization, calendar etc. A scheduling server can also have exclusive server-specific information such as a set of products, product categories/families, and availability information for those product/product categories/families or information needed to come up with availability information. Each scheduling server 348 can store portions of the scheduling results in the summary data 374 of the in-memory database 370. With each of the scheduling servers 344 associated with a different partition of the ordering data, there is no conflict or contention between the scheduling servers 344. Thus, requests for products that are in different product partitions can be processed in parallel on different scheduling nodes. Requests for products that are in the same product partitions can be processed in sequence on the scheduling node to which the products are assigned. The items that are to be processed by the scheduling server 348 can be specified in an items list 850, which is similar to the items list 550 described above with reference to FIG. 5. Similarly, the items that are to be processed by the scheduling server 354 can be specified in an items list 852.

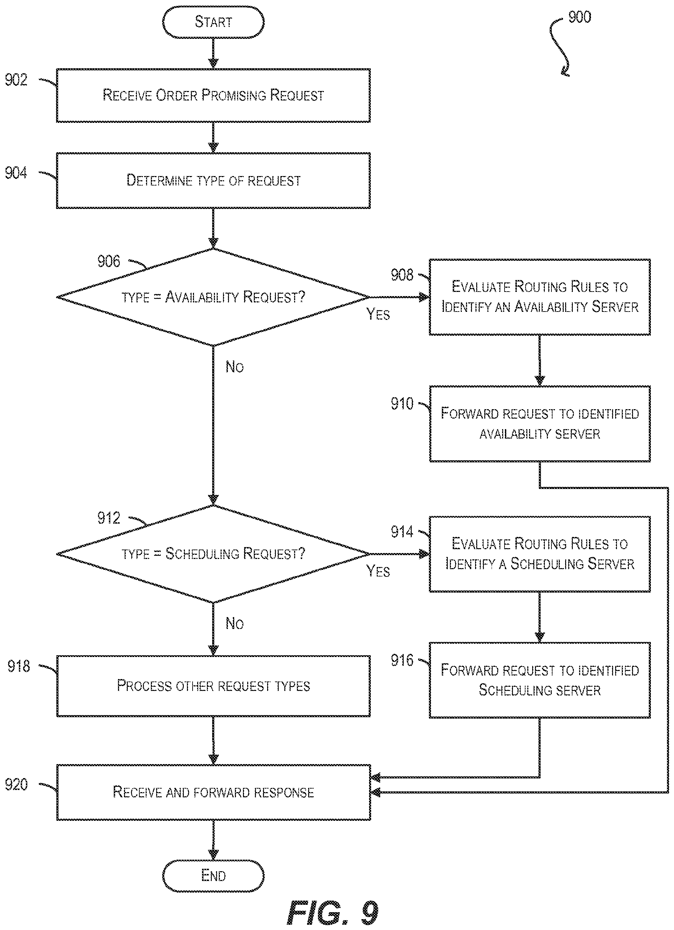

FIG. 9 is an illustrative flow diagram of a brokering process in accordance with embodiments of the invention. The process of FIG. 9 can be implemented by, for example, machine-readable instructions executed by a processor of a computer system, and can be executed by the request broker 306 of FIG. 3A. The process begins at block 902 by receiving an order promising request such as an order scheduling request 322. Block 904 determines the type of request, as described above with reference to the request broker 306. Block 906 determines if the request is of the availability request type. If so, block 908 evaluates the routing rules 309 to determine the server to which the request should be sent. Block 908 may consult a product-server map 317 to determine the server that corresponds to a product specified in the request. Block 910 forwards, e.g., sends, the request to the identified availability server using a communication network, shared memory, inter-process communication, or other form of communication. The availability server generates a response to the request, and block 920 receives and forwards the response to the web service or other entity that sent the request 322.

If block 906 determines that the request is not an availability request, then block 912 determines whether the request is of a scheduling request type. If so, block 914 evaluates the routing rules 309 to determine the server to which the request should be sent. Block 914 evaluates the routing rules to identify a scheduling server, similar to block 906, and block 916 forwards the request to the identified scheduling server. The scheduling server schedules the order and generates results, which block 920 receives and forwards to the invoking web service or other entity that sent the request 322.

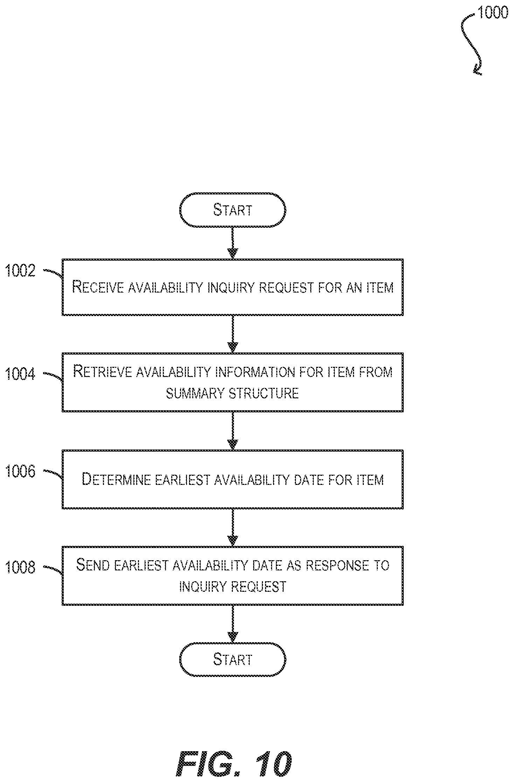

FIG. 10 is an illustrative flow diagram of an availability inquiry process in accordance with embodiments of the invention. The process of FIG. 10 can be implemented by, for example, machine-readable instructions executed by a processor of a computer system, and may be executed by one or more of the availability servers 324. The process of FIG. 10 begins at block 1002 by receiving an availability inquiry request 320 for an item. The request may be received from, for example, a web service, which in turn has forwarded the request from a request broker. Block 1004 retrieves availability information for the item specified in the request from a summary structure 330. Block 1006 uses the availability information to determine the earliest availability date for the item. Block 1008 sends the determined earliest availability date as a response to the inquiry request.

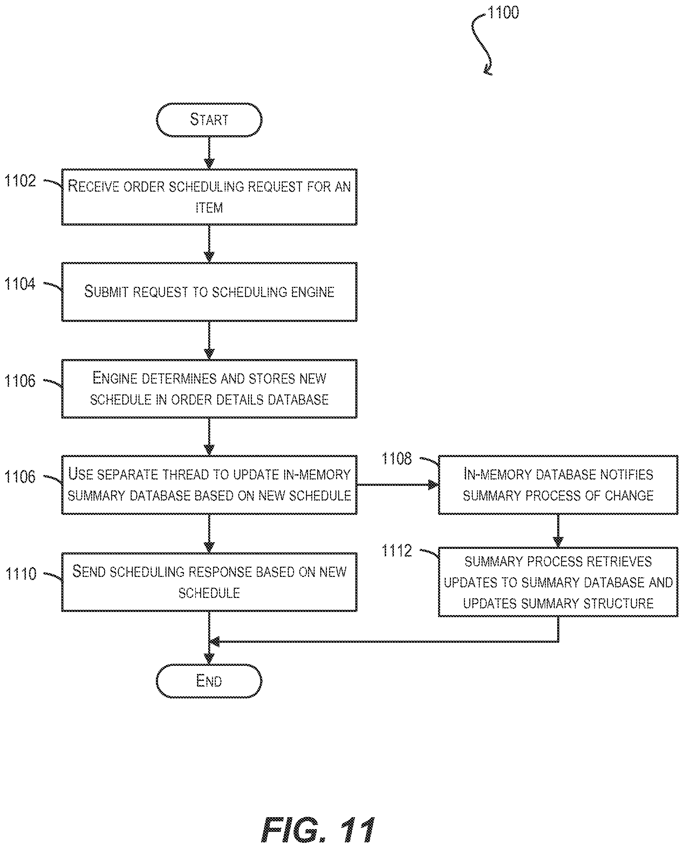

FIG. 11 is an illustrative flow diagram of a scheduling process in accordance with embodiments of the invention. The process of FIG. 11 can be implemented by, for example, machine-readable instructions executed by a processor of a computer system, and can be implemented by one or more of the scheduling servers 344 of FIG. 3A. The process begins at block 1102 by receiving an order scheduling request for a particular item. Block 1104 submits the request to the scheduling engine 350, which determines a schedule and promised completion date for the item and stores the schedule and completion date in the order details database 382. Block 1106 starts a new (or uses an existing) separate thread of control to update the summary data 374 in the in-memory database 370 with the new schedule data. That is, the server thread does not wait for the in-memory database 370 to be updated before continuing to process additional messages. Block 1110 sends a scheduling response 321, 323 to the entity from which the scheduling request was received (e.g., the web service 314). When the separate thread has updated the summary data 374, the in-memory database 370 detects the update and notifies the summary process 330 in each availability server 326 of the change, as shown at block 1108. The summary process 330 retrieves the updates to the summary database 382 and stores the updates in the summary structure 330 at block 1112, after which the process ends.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

## Claims

1. A method comprising:
receiving (902, 1002), by a request broker of a computer system, an inquiry requesting availability status of a specified item;
determining (904), by the request broker of the computer system, that the inquiry is an availability type request;
retrieving (1004), by the request broker of the computer system from one or more of a plurality of in-memory database instances, summary data associated with the specified item from a summary data structure stored in a memory of the computer system wherein the summary data structure is shared among two or more availability servers and one or more scheduling servers using said one or more in-memory database instances, the summary data structure being partitioned between the two or more availability servers, such that each of the two or more availability servers is assigned to different partitions of the summary data structure;
determining (908), by the request broker of the computer system by evaluating routing rules, which of the two or more availability servers is assigned to the summary data associated with the specified item;
forwarding (910), by the request broker of the computer system, the inquiry to the assigned availability server;
determining ( 1006), by said assigned availability server, availability data for the specified item based upon the summary data; and
sending (1008), by the request broker of the computer system, an inquiry response indicating the availability of the specified item based upon the determined availability data;
wherein the operations performed by the two or more availability servers may read but not write to the summary data and the operations performed by the one or more scheduling servers may read and/or write to the summary data;
wherein the plurality of in-memory database instances are distributed between the request broker of the computer system and the one or more scheduling servers.

2. The method of claim 1, wherein retrieving the summary data comprises querying the one or more in-memory database instances for the summary data associated with the item.

3. The method of claim 1, wherein retrieving the summary data is done without obtaining exclusive access to the in-memory database.

4. The method of claim 1, wherein the summary data includes one or more item identifiers and associated availability information, the availability information preferably comprising one or more dates of availability of the items.

5. The method of claim 1, wherein determining the availability data comprises retrieving a date of availability associated with the item by the summary data.

6. The method of claim 1, further comprising:
receiving a notification indicating that updated availability information is available; and
storing the updated availability information in the summary data structure,
wherein the summary data structure is preferably optimized for fast insertion and retrieval of data.

7. The method of claim 1, further comprising:
receiving (1102), by the request broker of the computer system, a scheduling request that identifies an item to be scheduled;
determining (1106), by the request broker of the computer system, a schedule for the item;
storing (1106), by the request broker of the computer system, availability information for the item in the one or more in-memory database instances, the availability information based upon the schedule; and
sending (1110), by the request broker of the computer system, a scheduling response based upon the schedule, and preferably
wherein the storing is performed ( 1106) by a separate thread, and/or wherein the storing causes the one or more in-memory database instances to generate a notification indicating that updated availability information is available, and the method further comprises:
receiving (1112), at an availability server, the notification indicating that updated availability information is available; and
storing (1112), at the availability server, the updated availability information in the summary data structure.

8. A method comprising:
receiving (1102), by a request broker of a computer system, a scheduling request that identifies an item to be scheduled;
determining (904 ), by the request broker of the computer system, that the scheduling request is a scheduling type request;
retrieving (1004), by the request broker of the computer system from one or more of a plurality of in-memory database instances, summary data associated with the specified item from a summary data structure stored in a memory of the computer system wherein the summary data structure is shared among one or more availability servers and two or more scheduling servers using said one or more in-memory database instances, the summary data structure being partitioned between the two or more scheduling servers, such that each of the two or more scheduling servers is assigned to different partitions of the summary data structure;
determining (914 ), by the request broker of the computer system by evaluating routing rules, which of the two or more scheduling servers is assigned to the summary data associated with the specified item;
forwarding (916), by the request broker of the computer system, the inquiry to the assigned scheduling server;
determining (1106), by said assigned scheduling server, a schedule for the item;
storing (1106), by the request broker of the computer system, availability information for the item in a persistent database, the availability information based upon the schedule;
updating (1112) the summary data structure in the one or more in-memory database instances with the new schedule data; and
sending (1110), by the computer system, a scheduling response based upon the schedule
wherein the operations performed by the one or more availability servers may read but not write to the summary data and the operations performed by the two or more scheduling servers may read and/or write to the summary data
wherein the plurality of in-memory database instances are distributed between the request broker of the computer system and the two or more scheduling servers.

## Patentansprüche

1. Verfahren, umfassend:
Empfangen (902, 1002) einer Anfrage, die den Verfügbarkeitsstatus eines angegebenen Artikels anfordert, durch einen Anforderungsvermittler eines Computersystems;
Bestimmen (904) durch den Anforderungsvermittler des Computersystems, dass es sich bei der Anfrage um eine Anforderung vom Typ Verfügbarkeit handelt;
Abrufen (1004), durch den Anforderungsvermittler des Computersystems, von einer oder mehreren von einer Vielzahl von In-Memory-Datenbankinstanzen, von Zusammenfassungsdaten, die dem angegebenen Artikel zugeordnet sind, aus einer Zusammenfassungsdatenstruktur, die in einem Speicher des Computersystems gespeichert ist, wobei die Zusammenfassungsdatenstruktur von zwei oder mehr Verfügbarkeitsservern und einem oder mehreren Planungsservern unter Verwendung der einen oder mehreren In-Memory-Datenbankinstanzen gemeinsam genutzt wird, wobei die Zusammenfassungsdatenstruktur zwischen den zwei oder mehr Verfügbarkeitsservern aufgeteilt ist, sodass jeder der zwei oder mehr Verfügbarkeitsserver verschiedenen Unterteilungen der Zusammenfassungsdatenstruktur zugewiesen ist;
Bestimmen (908), durch den Anforderungsvermittler des Computersystems durch Auswertung von Routing-Regeln, welcher der zwei oder mehr Verfügbarkeitsserver den Zusammenfassungsdaten zugewiesen ist, die dem angegebenen Artikel zugeordnet sind;
Weiterleiten (910) der Anfrage durch den Anforderungsvermittler des Computersystems an den zugewiesenen Verfügbarkeitsserver;
Bestimmen (1006) von Verfügbarkeitsdaten für den angegebenen Artikel auf der Grundlage der Zusammenfassungsdaten durch den zugewiesenen Verfügbarkeitsserver; und
Senden (1008) einer Anfrageantwort durch den Anforderungsvermittler des Computersystems, die die Verfügbarkeit des angegebenen Artikels auf der Grundlage der bestimmten Verfügbarkeitsdaten angibt;
wobei die von den zwei oder mehr Verfügbarkeitsservern durchgeführten Operationen die Zusammenfassungsdaten lesen, aber nicht beschreiben können, und die von dem einen oder den mehreren Planungsservern durchgeführten Operationen die Zusammenfassungsdaten lesen und/oder beschreiben können;
wobei die Vielzahl der In-Memory-Datenbankinstanzen zwischen dem Anforderungsvermittler des Computersystems und dem einen oder den mehreren Planungsservern verteilt sind.

2. Verfahren nach Anspruch 1, wobei das Abrufen der Zusammenfassungsdaten das Abfragen der einen oder mehreren In-Memory-Datenbankinstanzen nach den Zusammenfassungsdaten umfasst, die dem Artikel zugeordnet sind.

3. Verfahren nach Anspruch 1, wobei das Abrufen der Zusammenfassungsdaten erfolgt, ohne dass ein exklusiver Zugriff auf die In-Memory-Datenbank erhalten wird.

4. Verfahren nach Anspruch 1, wobei die Zusammenfassungsdaten einen oder mehrere Artikelidentifikatoren und zugeordnete Verfügbarkeitsinformationen einschließen, wobei die Verfügbarkeitsinformationen vorzugsweise ein oder mehrere Verfügbarkeitsdaten der Artikel umfassen.

5. Verfahren nach Anspruch 1, wobei das Bestimmen der Verfügbarkeitsdaten das Abrufen eines Verfügbarkeitsdatums, das dem Artikel zugeordnet ist, anhand der Zusammenfassungsdaten umfasst.

6. Verfahren nach Anspruch 1, weiter umfassend:
Empfangen einer Benachrichtigung, die angibt, dass aktualisierte Verfügbarkeitsinformationen verfügbar sind; und
Speichern der aktualisierten Verfügbarkeitsinformationen in der Zusammenfassungsdatenstruktur, wobei die Zusammenfassungsdatenstruktur vorzugsweise für schnelles Einfügen und Abrufen von Daten optimiert ist.

7. Verfahren nach Anspruch 1, weiter umfassend:
Empfangen (1102) einer Planungsanforderung durch den Anforderungsvermittler des Computersystems, die einen zu planenden Artikel identifiziert;
Bestimmen (1106) eines Zeitplans für den Artikel durch den Anforderungsvermittler des Computersystems;
Speichern (1106), durch den Anforderungsvermittler des Computersystems, von Verfügbarkeitsinformationen für den Artikel in der einen oder mehreren In-Memory-Datenbankinstanzen, wobei die Verfügbarkeitsinformationen auf dem Zeitplan basieren; und
Senden (1110) einer Planungsantwort durch den Anforderungsvermittler des Computersystems auf der Grundlage des Zeitplans, und vorzugsweise
wobei das Speichern von einem separaten Thread durchgeführt wird (1106), und/oder wobei das Speichern die eine oder mehrere In-Memory-Datenbankinstanzen veranlasst, eine Benachrichtigung zu erzeugen, die angibt, dass aktualisierte Verfügbarkeitsinformationen verfügbar sind, und das Verfahren weiter Folgendes umfasst:
Empfangen (1112) der Benachrichtigung auf einem Verfügbarkeitsserver, die angibt, dass aktualisierte Verfügbarkeitsinformationen verfügbar sind; und
Speichern (1112) der aktualisierten Verfügbarkeitsinformationen in der Zusammenfassungsdatenstruktur auf dem Verfügbarkeitsserver.

8. Verfahren, umfassend:
Empfangen (1102) einer Planungsanforderung durch einen Anforderungsvermittler eines Computersystems, die einen zu planenden Artikel identifiziert;
Bestimmen (904) durch den Anforderungsvermittler des Computersystems, dass es sich bei der Planungsanforderung um eine Anforderung vom Typ Planung handelt;
Abrufen (1004), durch den Anforderungsvermittler des Computersystems, von einer oder mehreren von einer Vielzahl von In-Memory-Datenbankinstanzen, von Zusammenfassungsdaten, die dem angegebenen Artikel zugeordnet sind, aus einer Zusammenfassungsdatenstruktur, die in einem Speicher des Computersystems gespeichert ist, wobei die Zusammenfassungsdatenstruktur von einem oder mehreren Verfügbarkeitsservern und zwei oder mehreren Planungsservern unter Verwendung der einen oder mehreren In-Memory-Datenbankinstanzen gemeinsam genutzt wird, wobei die Zusammenfassungsdatenstruktur zwischen den zwei oder mehr Planungsservern aufgeteilt ist, sodass jeder der zwei oder mehr Planungsserver verschiedenen Unterteilungen der Zusammenfassungsdatenstruktur zugewiesen ist;
Bestimmen (914), durch den Anforderungsvermittler des Computersystems durch Auswertung von Routing-Regeln, welcher der zwei oder mehr Planungsserver den Zusammenfassungsdaten zugewiesen ist, die dem angegebenen Artikel zugeordnet sind;
Weiterleiten (916) der Anfrage durch den Anforderungsvermittler des Computersystems an den zugewiesenen Planungsserver;
Bestimmung (1106) eines Zeitplans für den Artikel durch den zugewiesenen Planungsserver;
Speichern (1106) von Verfügbarkeitsinformationen für den Artikel durch den Anforderungsvermittler des Computersystems in einer dauerhaften Datenbank, wobei die Verfügbarkeitsinformationen auf dem Zeitplan basieren;
Aktualisieren (1112) der Zusammenfassungsdatenstruktur in der einen oder mehreren In-Memory-Datenbankinstanzen mit den neuen Zeitplandaten; und
Senden (1110) einer Planungsantwort durch das Computersystem auf der Grundlage des Zeitplans
wobei die von einem oder mehreren Verfügbarkeitsservern durchgeführten Operationen die Zusammenfassungsdaten lesen, aber nicht beschreiben können, und die von den zwei oder mehreren Planungsservern durchgeführten Operationen die Zusammenfassungsdaten lesen und/oder beschreiben können;
wobei die Vielzahl der In-Memory-Datenbankinstanzen zwischen dem Anforderungsvermittler des Computersystems und den zwei oder mehr Planungsservern verteilt sind.

## Revendications

1. Procédé, comprenant :
la réception (902, 1002), par un courtier de demandes d'un système informatique, d'une interrogation demandant un statut de disponibilité d'un élément spécifié ;
la détermination (904), par le courtier de demandes du système informatique, que l'interrogation est une demande de type disponibilité ;
la récupération (1004), par le courtier de demandes du système informatique à partir d'une ou de plusieurs d'une pluralité d'instances de base de données en mémoire, de données récapitulatives associées à l'élément spécifié à partir d'une structure de données récapitulatives stockées dans une mémoire du système informatique, dans lequel la structure de données récapitulatives est partagée entre deux ou plusieurs serveurs de disponibilité et un ou plusieurs serveurs de planification à l'aide desdites une ou plusieurs instances de base de données en mémoire, la structure de données récapitulatives étant partitionnée entre les deux ou plusieurs serveurs de disponibilité, de telle sorte que chacun des deux ou plusieurs serveurs de disponibilité soit assigné à différentes partitions de la structure de données récapitulatives ;
la détermination (908), par le courtier de demandes du système informatique en évaluant des règles de routage, de celui des deux ou plusieurs serveurs de disponibilité qui est assigné aux données récapitulatives associées à l'élément spécifié ;
la transmission (910), par le courtier de demandes du système informatique, de l'interrogation au serveur de disponibilité assigné ;
la détermination (1006), par ledit serveur de disponibilité assigné, de données de disponibilité pour l'élément spécifié sur la base des données récapitulatives ; et
l'envoi (1008), par le courtier de demandes du système informatique, d'une réponse d'interrogation indiquant la disponibilité de l'élément spécifié sur la base des données de disponibilité déterminées ;
dans lequel les opérations réalisées par les deux ou plusieurs serveurs de disponibilité peuvent lire mais pas écrire les données récapitulatives et les opérations réalisées par les un ou plusieurs serveurs de planification peuvent lire et/ou écrire les données récapitulatives ;
dans lequel la pluralité d'instances de base de données en mémoire sont réparties entre le courtier de demandes du système informatique et les un ou plusieurs serveurs de planification.

2. Procédé selon la revendication 1, dans lequel la récupération des données récapitulatives comprend l'interrogation des une ou plusieurs instances de base de données en mémoire pour les données récapitulatives associées à l'élément.

3. Procédé selon la revendication 1, dans lequel la récupération des données récapitulatives est réalisée sans obtenir un accès exclusif à la base de données en mémoire.

4. Procédé selon la revendication 1, dans lequel les données récapitulatives incluent un ou plusieurs identifiants d'élément et des informations de disponibilité associées, les informations de disponibilité comprenant de préférence une ou plusieurs dates de disponibilité des éléments.

5. Procédé selon la revendication 1, dans lequel la détermination des données de disponibilité comprend la récupération d'une date de disponibilité associée à l'élément par les données récapitulatives.

6. Procédé selon la revendication 1, comprenant en outre :
la réception d'une notification indiquant que des informations de disponibilité mises à jour sont disponibles ; et
le stockage des informations de disponibilité mises à jour dans la structure de données récapitulatives, dans lequel la structure de données récapitulatives est de préférence optimisée pour une insertion et une récupération rapides des données.

7. Procédé selon la revendication 1, comprenant en outre :
la réception (1102), par le courtier de demandes du système informatique, d'une demande de planification qui identifie un élément à planifier ;
la détermination (1106), par le courtier de demandes du système informatique, d'un calendrier pour l'élément ;
le stockage (1106), par le courtier de demandes du système informatique, d'informations de disponibilité pour l'élément dans les une ou plusieurs instances de base de données en mémoire, les informations de disponibilité étant basées sur le calendrier ; et
l'envoi (1110), par le courtier de demandes du système informatique, d'une réponse de planification sur la base du calendrier, et de préférence
dans lequel le stockage est réalisé (1106) par un fil séparé, et/ou dans lequel le stockage amène les une ou plusieurs instances de base de données en mémoire à générer une notification indiquant que des informations de disponibilité mises à jour sont disponibles, et le procédé comprend en outre :
la réception (1112), au niveau d'un serveur de disponibilité, de la notification indiquant que des informations de disponibilité mises à jour sont disponibles ; et
le stockage (1112), au niveau du serveur de disponibilité, des informations de disponibilité mises à jour dans la structure de données récapitulatives.

8. Procédé, comprenant :
la réception (1102), par un courtier de demandes d'un système informatique, d'une demande de planification qui identifie un élément à planifier ;
la détermination (904), par le courtier de demandes du système informatique, que la demande de planification est une demande de type planification ;
la récupération (1004), par le courtier de demandes du système informatique à partir d'une ou de plusieurs d'une pluralité d'instances de base de données en mémoire, de données récapitulatives associées à l'élément spécifié à partir d'une structure de données récapitulatives stockées dans une mémoire du système informatique, dans lequel la structure de données récapitulatives est partagée entre un ou plusieurs serveurs de disponibilité et deux ou plusieurs serveurs de planification à l'aide desdites une ou plusieurs instances de base de données en mémoire, la structure de données récapitulatives étant partitionnée entre les deux ou plusieurs serveurs de planification, de telle sorte que chacun des deux ou plusieurs serveurs de planification soit assigné à différentes partitions de la structure de données récapitulatives ;
la détermination (914), par le courtier de demandes du système informatique en évaluant des règles de routage, de celui des deux ou plusieurs serveurs de planification qui est assigné aux données récapitulatives associées à l'élément spécifié ;
la transmission (916), par le courtier de demandes du système informatique, de la demande au serveur de planification assigné ;
la détermination (1106), par ledit serveur de planification assigné, d'un calendrier pour l'élément ;
le stockage (1106), par le courtier de demandes du système informatique, d'informations de disponibilité pour l'élément dans une base de données persistante, les informations de disponibilité étant basées sur le calendrier ;
la mise à jour (1112) de la structure de données récapitulatives dans les une ou plusieurs instances de base de données en mémoire avec les nouvelles données de planification ; et
l'envoi (1110), par le système informatique, d'une réponse de planification basée sur la planification
dans lequel les opérations réalisées par les un ou plusieurs serveurs de disponibilité peuvent lire mais pas écrire les données récapitulatives et les opérations réalisées par les deux ou plusieurs serveurs de planification peuvent lire et/ou écrire les données récapitulatives
dans lequel la pluralité d'instances de base de données en mémoire sont réparties entre le courtier de demandes du système informatique et les deux ou plusieurs serveurs de planification.
